# EUROPEAN PATENT SPECIFICATION

(11) **EP 3 040 449 B1**
(45) Date of publication and mention of the grant of the patent: **21.03.2018**
(21) Application number: 14840785.1
(22) Date of filing: 18.08.2014
(51) Int. Cl.: C25B 9/00, C07C 5/10, C07C 13/18, C25B 3/04, C25B 9/10, C25B 11/03, C25B 11/04, C25B 11/08

(54) **ELECTROCHEMICAL REDUCTION DEVICE**
ELEKTROCHEMISCHE REDUKTIONSVORRICHTUNG
DISPOSITIF DE RÉDUCTION ÉLECTROCHIMIQUE

(30) Priority: 30.08.2013 JP 2013179555
(43) Date of publication of application: 06.07.2016
(73) Proprietor: JX Nippon Oil & Energy Corporation, Chiyoda-ku Tokyo 100-8162 (JP)
(72) Inventor: SATO, Yasushi, Tokyo 100-8162 (JP); MIYOSHI, Kota, Tokyo 100-8162 (JP); NAKAGAWA, Kojiro, Tokyo 100-8162 (JP); KOBORI, Yoshihiro, Tokyo 100-8162 (JP); OSHIMA, Shinji, Tokyo 100-8162 (JP)
(74) Representative: Algemeen Octrooi- en Merkenbureau B.V.
(86) International application number: PCT/JP2014/004211
(87) International publication number: WO 2015/029366

(56) References cited:
- WO-A1-2006/043394
- WO-A1-2011/122155
- WO-A1-2012/043086
- WO-A1-2013/111585
- WO-A1-2013/125238
- US-A1- 2013 087 451

## Description

### Technical Field

The present invention relates to a technique for electrochemically hydrogenating an aromatic compound.

### Background Art

It is known that a cyclic organic compound such as cyclohexane or decalin can be efficiently obtained by hydrogenating at least one benzene ring of a corresponding aromatic hydrocarbon compound (benzene or naphthalene) with the use of hydrogen gas. This reaction requires reaction conditions of high temperature and high pressure, and hence it is not suitable for small and medium scale manufacturing of cyclic organic compounds. It is also known that, on the other hand, an electrochemical reaction using an electrolysis cell proceeds without gaseous hydrogen being required and under relatively mild reaction conditions (from normal temperature to approximately 200°C and normal pressure) because water can be used as a hydrogen source.

### Related Art Documents

### Patent Documents

[Patent Document 1] JP 2003-045449
[Patent Document 2] JP 2005-126288
[Patent Document 3] JP 2005-239479

### DISCLOSURE OF THE INVENTION

### Problem to be Solved by the Invention

As an example in which a benzene ring of an aromatic hydrocarbon compound such as toluene is electrochemically hydrogenated, a method is reported, in which toluene that has been vaporized into a gaseous state is sent to the reduction electrode side to obtain methylcyclohexane, a benzene-ring hydrogenated substance (hydride), without going through a state of hydrogen gas in a configuration similar to that of water electrolysis (see Patent Document 1). In this method, however, the amount of substance that can be transformed per electrode area or time (current density) is not large, and it has been difficult to industrially produce a hydride of an aromatic hydrocarbon compound.

In order to address the problem, the present inventors have studied a method in which a liquid aromatic hydrocarbon compound is directly introduced into the reduction electrode side of an electrolysis cell. This method has the advantage that an electrolytic hydride-producing reaction can be caused to proceed at a higher current density in comparison with a method in which a vaporized aromatic hydrocarbon compound is introduced, see WO 2013/111585 and WO 2013/125238. However, a technique, for causing a hydride-producing reaction for an aromatic hydrocarbon compound supplied in a liquid state to proceed more efficiently, has not been studied sufficiently, and there remains a challenge to be addressed.

The present invention has been made in view of such a challenge, and a purpose of the invention is to provide a technique in which a hydride of an aromatic compound can be produced at a high efficiency by an electrochemical reaction. Further methods and devices are disclosed in WO 2011/122155, WO 2006/043394, WO 2012/043086 and US 2013/0087451.

### Means for Solving the Problem

An aspect of the present invention is an electrochemical reduction device defined in the appended claims.

In the electrochemical reduction device of the aforementioned aspect, the diffusion layer may have a fiber-like shape or a shape in which many particles are solidified. The diffusion layer may contain a carbon fiber. Additionally, the diffusion layer may contain a material having electron conductivity of 1.0 × 10⁻² S/cm or more.

Combinations of the aforementioned respective elements will also be within the scope of the present invention sought to be patented by the present patent application. Advantage of the Invention

According to the present invention, a hydride of an aromatic compound can be produced at a high efficiency by an electrochemical reaction.

### BRIEF DESCRIPTION OF THE DRAWINGS

Fig. 1 is a schematic view illustrating a schematic configuration of an electrochemical reduction device according to an embodiment;
Fig. 2 is an exploded perspective view illustrating a schematic configuration of an electrode unit included in the electrochemical reduction device according to an embodiment;
Fig. 3 is a side view illustrating a schematic configuration of an electrode unit included in the electrochemical reduction device according to an embodiment;
Fig. 4 is a schematic view illustrating an enlarged example of a sectional structure of an oxygen generating electrode; and Fig. 5 is a graph showing I-V curves obtained by respective electrode units of Examples from 1 to 5 and Comparative Example 1.

### BEST MODE FOR CARRYING OUT THE INVENTION

Hereinafter, embodiments of the present invention will now be described with reference to the drawings. In the figures, like numerals represent like constituting elements and the description thereof will be appropriately omitted.

### (Embodiment)

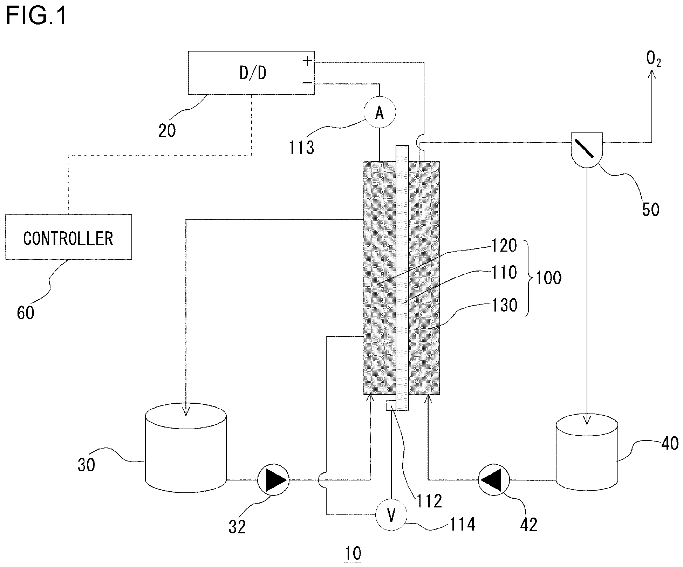

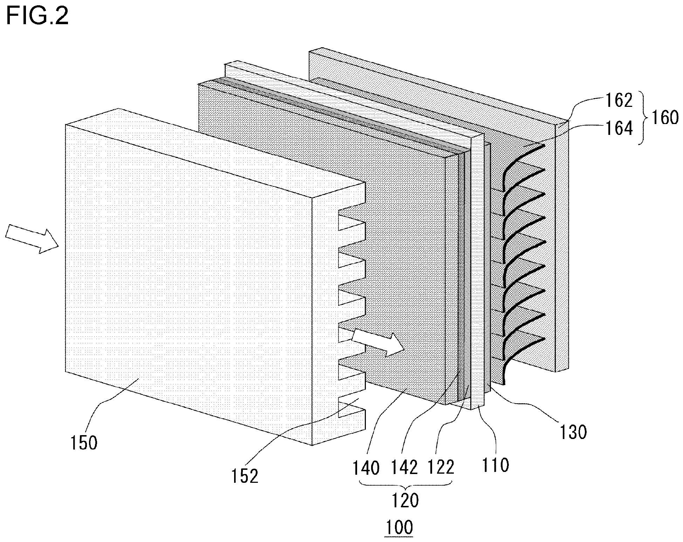

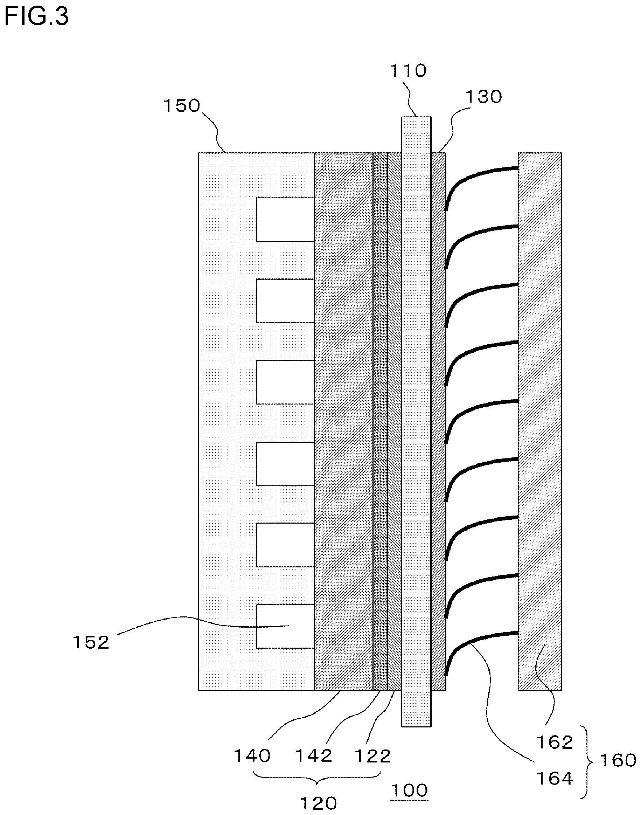

Fig. 1 is a schematic view illustrating a schematic configuration of an electrochemical reduction device 10 according to an embodiment. Fig. 2 is an exploded perspective view illustrating a schematic configuration of an electrode unit included in the electrochemical reduction device 10 according to an embodiment. Fig. 3 is a side view illustrating a schematic configuration of an electrode unit included in the electrochemical reduction device 10 according to an embodiment.

As illustrated in Fig. 1, the electrochemical reduction device 10 includes an electrode unit 100, a power controller 20, an organic material storage tank 30, a water storage tank 40, a gas-water separation unit 50, and a controller 60.

The power controller 20 is, for example, a DC/DC converter for converting the output voltage of a power source into a predetermined voltage. The positive electrode output terminal of the power controller 20 is connected to an oxygen generating electrode (positive electrode) 130 of the electrode unit 100. The negative electrode output terminal of the power controller 20 is connected to a reduction electrode (negative electrode) 120 of the electrode unit 100. Thereby, a predetermined voltage is applied between the oxygen generating electrode 130 and the reduction electrode 120 of the electrode unit 100. A reference pole may be provided in the power controller 20 in order to detect the potentials of the positive and negative electrodes. A reference pole input terminal is connected to a reference electrode 112 provided on the later-described electrolyte membrane 110. The outputs of the positive electrode output terminal and the negative electrode output terminal of the power controller 20 are controlled by the controller 60 such that the potentials of the oxygen generating electrode 130 and the reduction electrode 120 become desired ones based on the potential of the reference electrode 112. A power source is not particularly limited, and normal system power may be used, or electrical power derived from natural energy such as sunlight or wind power can also be used preferably.

The organic substance storage tank 30 stores an aromatic compound. The aromatic compound used in the present embodiment is an aromatic hydrocarbon compound or a nitrogen-containing heterocyclic aromatic compound, which contains at least one aromatic ring. The aromatic compound is selected from benzene, naphthalene, anthracene, diphenylethane, pyridine, pyrimidine, pyrazine, quinoline, isoquinoline, N-alkylpyrrole, N-alkylindole, and N-alkyldibenzopyrrole. From one to four hydroger atoms of an aromatic ring of any one of the aforementioned aromatic hydrocarbon compounds or nitrogen-containing heterocyclic aromatic compounds may be substituted by alkyl groups. However, the "alkyl" of any one of the aromatic compounds is a C₁₋₆ straight or branched alkyl group. For example, alkylbenzenes include toluene, ethyl benzene, and the like, dialkylbenzenes include xylene, diethylbenzene, and the like, and trialkylbenzenes include mesitylene and the like. Alkylnaphthalenes include methylnaphthalene. In the following description, the aromatic hydrocarbon compounds and the nitrogen-containing heterocyclic aromatic compounds may be collectively referred to as "aromatic compounds". It is preferable that the aromatic compound is a liquid at room temperature. When a mixture of two or more of the aforementioned aromatic compounds is used, the mixture should be a liquid. Consequently, the aromatic compound can be supplied to the electrode unit 100 in a liquid state without being heated, pressurized, or the like, and hence the configuration of the electrochemical reduction device 10 can be simplified. The concentration of the aromatic hydrocarbon compound in a liquid state is 0.1% or more, preferably 0.3% or more, and more preferably 0.5% or more.

The aromatic compound stored in the organic material storage tank 30 is supplied to the reduction electrode 120 of the electrode unit 100 by a first liquid supplier 32. As the first liquid supplier 32, for example, various types of pumps such as a gear pump or a cylinder pump, or a gravity flow device or the like can be used. As the aromatic compound, an N-substitution product of the aforementioned aromatic compound may be used. A circulation pathway is provided between the organic material storage tank 30 and the reduction electrode 120 of the electrode unit 100. The aromatic compound, a hydride of which has been produced by the electrode unit 100, and an unreacted aromatic compound are stored in the organic material storage tank 30 after passing through the circulation pathway. No gas is generated by a major reaction that proceeds at the reduction electrode 120 of the electrode unit 100, but if gas such as hydrogen is by-produced, a gas-liquid separation device may be provided in the middle of the circulation pathway.

The water storage tank 40 stores, for example, ion exchange water, pure water, an aqueous solution in which an acid such as sulfuric acid is added to ion exchange water or pure water, or the like (hereinafter, they are simply referred to as "water") . The water stored in the water storage tank 40 is supplied to the oxygen generating electrode 130 of the electrode unit 100 by a second liquid supplier 42. As the second liquid supplier 42, for example, various types of pumps such as a gear pump or a cylinder pump, or a gravity flow device or the like can be used, similarly to the first liquid supplier 32. A circulation pathway is provided between the water storage tank 40 and the oxygen generating electrode 130 of the electrode unit 100. The water that has not been reacted in the electrode unit 100 is stored in the water storage tank 40 after passing through the circulation pathway. The gas-water separation unit 50 is provided in the middle of a pathway through which unreacted water is sent back to the water storage tank 40 from the electrode unit 100. With the gas-water separation unit 50, gas such as oxygen generated by the electrolysis of water in the electrode unit 100 is separated from water and discharged to the outside of the system.

As illustrated in Figs. 2 and 3, the electrode unit 100 includes the electrolyte membrane 110, the reduction electrode 120 having a reduction electrode catalyst layer 122, a diffusion layer 140, and a dense layer 142, the oxygen generating electrode 130, a separator 150, and a current collector 160. In Fig. 1, the electrode unit 100 is illustrated in a simplified way in which the separator 150 and the current collector 160 are omitted.

The electrolyte membrane 110 is formed of a material (ionomer) having proton conductivity, and inhibits substances from getting mixed or being diffused between the reduction electrode 120 and the oxygen generating electrode 130 while selectively conducting protons. The thickness of the electrolyte membrane 110 is preferably from 5 to 300 µm, more preferably from 10 to 150 µm, and most preferably from 20 to 100 µm. If the thickness of the electrolyte membrane 110 is less than 5 µm, the barrier property of the electrolyte membrane 110 is deteriorated, so that cross-leaking is likely to occur. On the other hand, if the thickness thereof is more than 300 µm, ion transfer resistance becomes too large, which is not preferred.

The area resistance of the electrolyte membrane 110, that is, the ion transfer resistance per geometric area thereof is preferably 2000 mΩ·cm² or less, more preferably 1000 mΩ·cm² or less, and most preferably 500 mΩ·cm² or less. If the area resistance of the electrolyte membrane 110 is more than 2000 mΩ·cm², proton conductivity may become insufficient. Examples of the material having proton conductivity (i.e., a cation-exchanging ionomer) include perfluorosulfonic acid polymers such as NAFION (registered trademark) and FLEMION (registered trademark). The ion exchange capacity (IEC) of the cation exchange ionomer is preferably from 0.7 to 2 meq/g, and more preferably from 1 to 1.2 meq/g. If the ion exchange capacity thereof is less than 0.7 meq/g, ion conductivity may become insufficient. On the other hand, if the ion exchange capacity of the cation exchange ionomer is more than 2 meq/g, the solubility of the ionomer in water is increased, and hence the strength of the electrolyte membrane 110 may become insufficient.

On the electrolyte membrane 110, the reference electrode 112 may be provided in an area spaced apart from the reduction electrode 120 and the oxygen generating electrode 130 so as to contact the electrolyte membrane 110, as illustrated in Fig. 1. That is, the reference electrode 112 is electrically isolated from the reduction electrode 120 and the oxygen generating electrode 130. The reference electrode 112 is held at a reference electrode potential V_{Ref}. Examples of the reference electrode 112 include a standard hydrogen reduction electrode (reference electrode potential V_{Ref} = 0 V) and an Ag/AgCl electrode (reference electrode potential V_{Ref} = 0.199 V), but the reference electrode 112 is not limited thereto. When the reference electrode 112 is installed, it is preferable to install it on the surface of the electrolyte membrane 110 on the reduction electrode 120 side.

The current I flowing between the reduction electrode 120 and the oxygen generating electrode 130 is detected by a current detection unit 113 illustrated in Fig. 1. The value of the current I detected by the current detection unit 113 may be inputted to the controller 60 to be used for the control of the power controller 20 by the controller 60.

A potential difference ΔV_{CA} between the reference electrode 112 and the reduction electrode 120 is detected by a voltage detection unit 114 illustrated in Fig. 1. The value of the potential difference ΔV_{CA} detected by the voltage detection unit 114 may be inputted to the controller 60 to be used for the control of the voltage controller 20 by the controller 60.

The reduction electrode 120 is provided in contact with one major surface of the electrolyte membrane 110. The reduction electrode 120 is a laminated body in which the reduction electrode catalyst layer 122, the dense layer 142, and the diffusion layer 140 are laminated in this order from the electrolyte membrane 110 side.

The reduction electrode catalyst layer 122 is provided in contact with one major surface of the electrolyte membrane 110. The reduction electrode catalyst layer 122 includes a reduction catalyst for producing a hydride of an aromatic compound. The reduction catalyst used in the reduction electrode catalyst layer 122 contains at least one of Pt and Pd. Additionally, the reduction catalyst may be composed of a metal composition that contains a first catalyst metal (noble metal) made of at least one of Pt and Pd, and one or two or more second catalyst metals selected from the group consisting of Cr, Mn, Fe, Co, Ni, Cu, Zn, Mo, Ru, Sn, W, Re, Pb, and Bi. In this case, the form of the metal composition is an alloy of the first catalyst metal and the second catalyst metal, or an intermetallic compound made of the first catalyst metal and the second catalyst metal. The ratio of the first catalyst metal to the total mass of the first catalyst metal and the second catalyst metals is preferably from 10 to 95 wt%, more preferably from 20 to 90 wt%, and most preferably from 25 to 80 wt%. If the ratio of the first catalyst metal is less than 10 wt%, durability may be deteriorated in terms of resistance to dissolving, and the like. On the other hand, if the ratio of the first catalyst metal is more than 95 wt%, the properties of the reduction catalyst become closer to those of a noble metal alone, and hence the electrode activity may become insufficient. In the following description, the first catalyst metal and the second catalyst metals may be collectively referred to as a "catalyst metal."

The aforementioned catalyst metal may be supported by an electron conductive material (support). The electron conductivity of the electron conductive material is preferably 1.0 × 10⁻² S/cm or more, more preferably 3.0 × 10⁻² S/cm or more, and most preferably 1.0 × 10⁻¹ S/cm or more. If the electron conductivity of the electron conductive material is less than 1.0 × 10⁻² S/cm, sufficient electron conductivity may not be imparted. Examples of the electron conductive material include electron conductive materials containing any one of porous carbon, a porous metal, and a porous metal oxide as a major component. Examples of the porous carbon include carbon black such as KETJEN BLACK (registered trademark), acetylene black, and VULCAN (registered trademark). The BET specific surface area of the porous carbon, measured by a nitrogen adsorption method, is preferably 100 m²/g or more, more preferably 150 m²/g or more, and most preferably 200 m²/g or more. If the BET specific surface area of the porous carbon is less than 100 m²/g, it is difficult to uniformly support the catalyst metal. Accordingly, the rate of utilizing the surface of the catalyst metal is decreased, possibly causing the catalyst performance to be deteriorated. Examples of the porous metal include, for example, Pt black, Pd black, a Pt metal deposited in a fractal shape, and the like. Examples of the porous metal oxide include oxides of Ti, Zr, Nb, Mo, Hf, Ta and W. Besides these, examples of the porous electron conductive material for supporting the catalyst metal include nitrides, carbides, oxynitrides, carbonitrides, partially-oxidized carbonitrides of metals such as Ti, Zr, Nb, Mo, Hf, Ta, and W (hereinafter, they are collectively referred to as porous metal carbonitrides and the like). The BET specific surface areas of the porous metal, the porous metal oxide, the porous metal carbonitrides and the like, measured by a nitrogen adsorption method, are preferably 1 m²/g or more, more preferably 3 m²/g or more, and most preferably 10 m²/g or more. If the respective BET specific surface areas of the porous metal, the porous metal oxide, the porous metal carbonitrides and the like are less than 1 m²/g, it is difficult to uniformly support the catalyst metal. Accordingly, the rate of utilizing the surface of the catalyst metal is decreased, possibly causing the catalyst performance to be deteriorated.

To the reduction electrode catalyst layer 122, a material having electron conductivity, such as the aforementioned electron conductive oxide or carbon black, maybe added separately from the electron conductive compound for supporting the catalyst metal. Thereby, the number of electron-conducting paths among reduction catalyst particles can be increased, and hence the resistance per geometric area of a reduction catalyst layer can be lowered in some cases.

The reduction electrode catalyst layer 122 may contain, as an additive, a fluorine-based resin such as polytetrafluoroethylene (PTFE).

The reduction electrode catalyst layer 122 may contain an ionomer having proton conductivity. The reduction electrode catalyst layer 122 preferably contains, at a predetermined mass ratio, an ion conductive material (ionomer) having a structure that is identical or similar to that of the aforementioned electrolyte membrane 110. Thereby, the ion conductivity of the reduction electrode catalyst layer 122 can be improved. When the catalyst support is porous, the ion conductivity of the reduction electrode catalyst layer 122 is particularly and greatly improved with the reduction electrode catalyst layer 122 containing an ionomer having proton conductivity. Examples of the ionomer having proton conductivity (i.e., a cation-exchanging ionomer) include perfluorosulfonic acid polymers such as NAFION (registered trademark) and FLEMION (registered trademark). The ion exchange capacity (IEC) of the cation exchange ionomer is preferably from 0.7 to 3 meq/g, more preferably from 1 to 2.5 meq/g, and most preferably from 1.2 to 2 meq/g. When the catalyst metal is supported by porous carbon (carbon support), the mass ratio I/C of the cation-exchanging ionomer (I) to the carbon support (C) is preferably from 0.1 to 2, more preferably from 0.2 to 1.5, and most preferably from 0.3 to 1.1. If the mass ratio I/C is less than 0.1, it may be difficult to obtain sufficient ion conductivity. On the other hand, if the mass ratio I/C is more than 2, the thickness of an ionomer coating over the catalyst metal is increased, and hence the contact of the aromatic compound, a reactant, with a catalyst-active site may be inhibited or the electrode activity may be decreased due to a decrease in the electron conductivity.

It is also preferable that the reduction catalyst is partially coated with the ionomer included in the reduction electrode catalyst layer 122. Thereby, three elements (aromatic compound, proton, electron), which are necessary for an electrochemical reaction in the reduction electrode catalyst layer 122, can be efficiently supplied to a reaction site.

The dense layer 142 is provided, of two major surfaces of the reduction electrode catalyst layer 122, in contact with one major surface thereof that is opposite to the other major surface that the electrolyte membrane 110 contacts. The dense layer 142 has a function in which a liquid aromatic compound and a hydride of an aromatic compound, which have a relatively low surface tension, are caused to pass through it, while liquid water having a relatively high surface tension is suppressed from passing through it.

The diffusion layer 140 is provided, of two major surfaces of the dense layer 142, in contact with one major surface thereof that is opposite to the other major surface that the reduction electrode catalyst layer 122 contacts. The diffusion layer 140 is formed of a porous material or fiber that causes the liquid aromatic compound and hydride of an aromatic compound, which have been supplied from the later-described separator 150, to permeate and that has good electron conductivity. Additionally, it is preferable that the material that forms the diffusion layer 140 has a high affinity with the aforementioned aromatic compounds. As the material that forms the diffusion layer 140, for example, carbon paper, and woven cloth or non-woven cloth of carbon, etc., can be used. When carbon paper is used as the material that forms the diffusion layer 140, the thickness of the diffusion layer 140 is preferably from 50 to 1000 µm, and more preferably from 100 to 500 µm. Additionally, it is preferable that the electron conductivity of the material that forms the diffusion layer 140 is 10⁻² S/cm or more.

Besides these, a material can be used for the diffusion layer 140, in which fine particles of a corrosion-resistant alloy such as Cr-Mo are solidified. In this case, it is preferable to perform, on the surface of the metal, a treatment such as a water repellent treatment, lipophilic treatment, or the like.

The dense layer 142 is formed, for example, by coating a kneaded product in a paste state, which is obtained by kneading an electron conductive powder and a water repellent, to the diffusion layer 140 so as to fill the void thereof and then by drying it. Conductive carbon such as VULCAN (registered trademark) can be used as the electron conductive powder. A fluorine resin such as a tetrafluoroethylene resin (PTFE) is used as the water repellent. The ratio of the electron conductive powder to the water repellent can be appropriately determined to be within a range in which desired electron conductivity and water repellency are obtained, but when VULCAN (registered trademark) and PTEE are used as the electron conductive powder and the water repellent, respectively, the ratio is, for example, from 4 : 1 to 1 : 1 (VULCAN : PTEE).

The mean flow pore diameter (dm) of the dense layer 142 is preferably from 100 nm to 20 µm, and more preferably from 500 nm to 5 µm. Additionally, the thickness of the dense layer 142 is preferably from 1 to 50 µm, and more preferably from 2 to 20 µm. When the dense layer 142 is formed to be recessed from the surface of the diffusion layer 140, the average thickness of the dense layer 142 itself, including the portion recessed into the diffusion layer 140, is defined to be the thickness.

By providing the dense layer 142 on one major surface of the reduction electrode catalyst layer 122, the one major surface being opposite to the other major surface thereof that the electrolyte membrane 110 contacts, water can be easily retained in a proton conductive portion such as the ionomer (electrolyte) in the reduction electrode catalyst layer 122 and the cathode side of the electrolyte membrane 110. Thereby, the proton reduction reaction at the reduction electrode 120 side can be facilitated more easily in an environment in which a large amount of organic substances such as aromatic compounds are present.

The separator 150 is laminated on one major surface of the diffusion layer 140, the one major surface being opposite to the electrolyte membrane 110. The separator 150 is formed of a carbon resin, or a corrosion-resistant alloy such as Cr-Ni-Fe, Cr-Ni-Mo-Fe, Cr-Mo-Nb-Ni, or Cr-Mo-Fe-W-Ni. One or more groove-like flow channels 152 are provided in the surface of the separator 150 on the diffusion layer 140 side. The liquid aromatic compound supplied from the organic substance storage tank 30 circulates through the flow channel 152, and the liquid aromatic compound permeates the liquid diffusion layer 140 from the flow channel 152. The form of the flow channel 152 is not particularly limited, but for example, a straight flow channel or a serpentine flow channel can be employed. When a metal material is used for the separator 150, the separator 150 may have a structure formed by sintering sphere-like or pellet-like metal fine powders.

The oxygen generating electrode 130 is provided in contact with the other major surface of the electrolyte membrane 110. The oxygen generating electrode 130 contains, as a catalyst, one or two or more metals or metal oxides, the metal (metals) being selected from the group consisting of Ru, Rh, Pd, Ir, and Pt. These catalysts may be dispersedly supported or coated by or on a metal substrate having electron conductivity such as: a metal fiber (fiber diameter: e.g., from 10 to 30 µm) of a metal or an alloy whose major components are metals, the metal or metals being selected from the group consisting of Ti, Cr, Mn, Fe, Co, Ni, Cu, Zn, Nb, Mo, Ta, and W; a mesh (diameter: e.g., from 500 to 1000 µm) ; a sintered body of a porous metal; a foamed molded body (form) ; an expanded metal; or the like. When these catalysts are layered, the thickness of the catalyst layer is preferably from 0.1 to 10 µm, and more preferably from 0.2 to 5 µm. In particular, when IrO₂ is used as a catalyst, manufacturing costs can be reduced by coating a metal substrate with a thin film because IrO₂ is expensive. The surface of the metal substrate may be covered with an electron conductive protective layer made of one or two or more metals or metal oxides, the metal (metals) being selected from the group consisting of Nb, Mo, Ta, and W. The thickness of the protective layer is preferably from 0.05 to 2 µm, and more preferably from 0.1 to 1 µm. The metal substrate plays a role as a substrate for holding the catalyst, and also functions as a current collecting member.

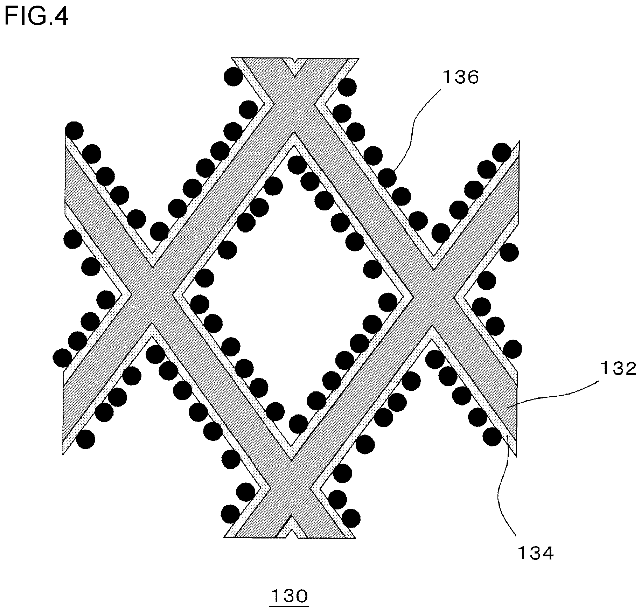

Fig. 4 is a schematic view illustrating an enlarged example of a sectional structure of the oxygen generating electrode 130. In the oxygen generating electrode 130 of this example, a catalyst 136 is held on the surface of a protective layer 134 covering a metal substrate 132. The metal substrate 132 is an expanded metal formed of a metal material such as Ti. The protective layer 134 is formed of one or two or more metals or metal oxides, the metal (metals) being selected from the group consisting of Nb, Mo, Ta, and W. The catalyst 136 is formed of one or two or more metals or metal oxides, the metal (metals) being selected from the group consisting of Ru, Rh, Pd, Ir, and Pt. Thus, by covering the metal substrate 132 with the protective layer 134, the durability of the metal substrate 132 can be improved.

As illustrated in Figs. 2 and 3, the current collector 160 electrically connected to the aforementioned oxygen generating electrode 130 is provided in the electrode unit 100. The current collector 160 has a substrate portion 162 and a connection portion 164, both formed of a metal having good electron conductivity, such as copper or aluminum.

The substrate portion 162 is a planar metal member installed so as to be spaced apart from the oxygen generating electrode 130 by a predetermined distance. The space between the substrate portion 162 and the oxygen generating electrode 130 is used for the circulation of the water supplied to the oxygen generating electrode 130.

The connection portion 164 of the present embodiment is a strip-shaped metal member whose short side is curved. A plurality of the connection portions 164 are provided in combination so as to be spaced apart from each other by predetermined intervals in a state in which one long side of each connection portion 164 is fixed to the substrate portion 162. The other long side thereof is electrically connected to the oxygen generating electrode 130. Each connection portion 164 and the oxygen generating electrode 130 may be fixed by welding, etc. Because the connection portion 164 has a shape in which the short side is curved, it can play a role of a spring. Accordingly, the contact between the connection portion 164 and the oxygen generating electrode 130 can be made more reliable by pressing the substrate portion 162 toward the oxygen generating electrode 130. The connection portion 164 is strip-shaped in the present embodiment, but the shape of the connection portion 164 is not limited thereto. The connection portion 164 may be formed, for example, by a spring-like wire, etc.

In the present embodiment, liquid water is supplied to the oxygen generating electrode 130, but humidified gas (for example, air) may be used instead of liquid water. In this case, the dew-point temperature of the humidified gas is preferably from room temperature to 100°C, and more preferably from 50 to 100°C.

When toluene is used as the aromatic compound, reactions in the electrode unit 100 are as follows.

### <Electrode Reaction at Oxygen Generating Electrode>

3H₂O → 1.5O₂ + 6H⁺ + 6e⁻ : E0 = 1.23 V

### <Electrode Reaction at Reduction Electrode>

Toluene + 6H⁺+ 6e⁻ → methylcyclohexane : E0 = 0.153 V (vs

RHE)

In other words, the electrode reaction at the oxygen generating electrode and that at the reduction electrode proceed in parallel, and the protons generated by the electrolysis of water occurring due to the electrode reaction at the oxygen generating electrode 130 is supplied to the reduction electrode 120 via the electrolyte membrane 110. The proton supplied to the reduction electrode 120 is used for producing a hydride of an aromatic compound in the electrode reaction at the reduction electrode 120.

According to the electrochemical reduction device 10 described above, an aromatic compound is uniformly and quickly supplied to a reaction site of the reduction electrode catalyst layer 122 and a hydride of the aromatic compound is promptly removed from the reaction site, by providing the diffusion layer 140. Thereby, the hydride-producing reaction for an aromatic compound can be promoted. In particular, even if the concentration of an aromatic compound is decreased, a decrease in the hydride-producing reaction for the aromatic compound can be suppressed. Additionally, a certain amount of moisture can be retained in the reduction electrode catalyst layer 122 by providing the dense layer 142 between the diffusion layer 140 and the reduction electrode catalyst layer 122, and hence the electrolyte membrane 110 and the reduction electrode catalyst layer 122 are suppressed from being dried and the hydride-producing reaction for an aromatic compound can be further promoted.

### Examples

Hereinafter, examples of the present invention will be described, which do not intend to limit the scope of the invention, but are presented as preferred illustrative examples of the invention.

The configurations of respective electrode units of Examples from 1 to 5 and Comparative Example 1 are shown in Table 1. The respective electrode units were evaluated by using toluene as an aromatic compound. Differences among the respective electrode units of Examples from 1 to 5 and Comparative Example 1 are as follows: That is, the electrode units of Examples from 1 to 5 have a dense layer, while that of Comparative Example 1 does not have a dense layer. The mean flow pore diameters of the dense layers of Examples from 1 to 5 were set to be 3.2 µm, 1.1 µm, 0.76 µm, 1 µm, and 23 µm, respectively. The electron conductive powders of the dense layers of Examples from 1 to 5 were VULCAN (registered trademark), and the water repellents thereof were PTFE. However, the ratio of the VULCAN to the PTEE was set to be 1:1 in Examples 1, 2, 4, and 5, and that was set to be 4:1 in Example 3. The thicknesses of the dense layers of Examples from 1 to 5 were set to be 8.6 µm, 8.5 µm, 8.4 µm, 0.76 µm, and 9.6 µm, respectively.

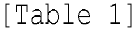

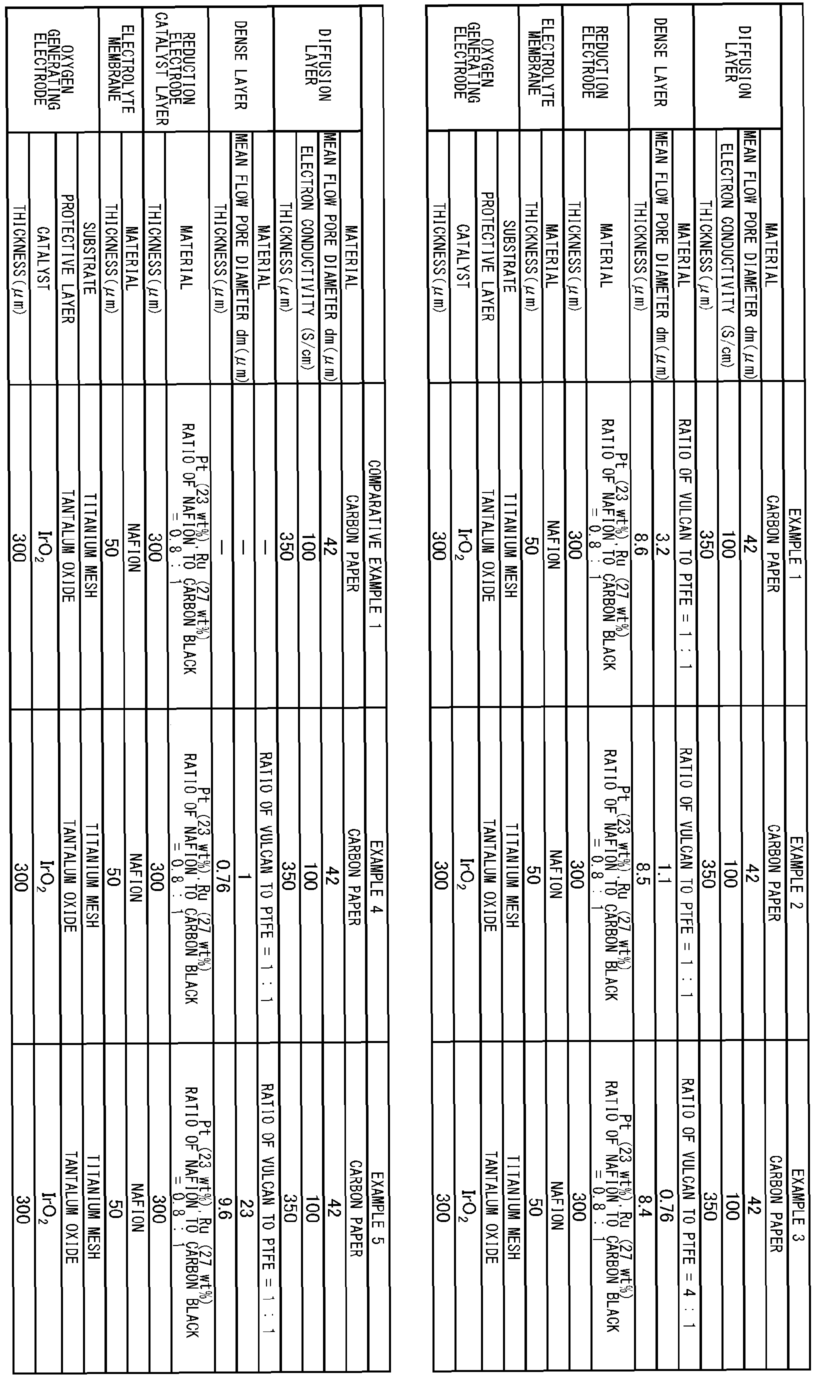

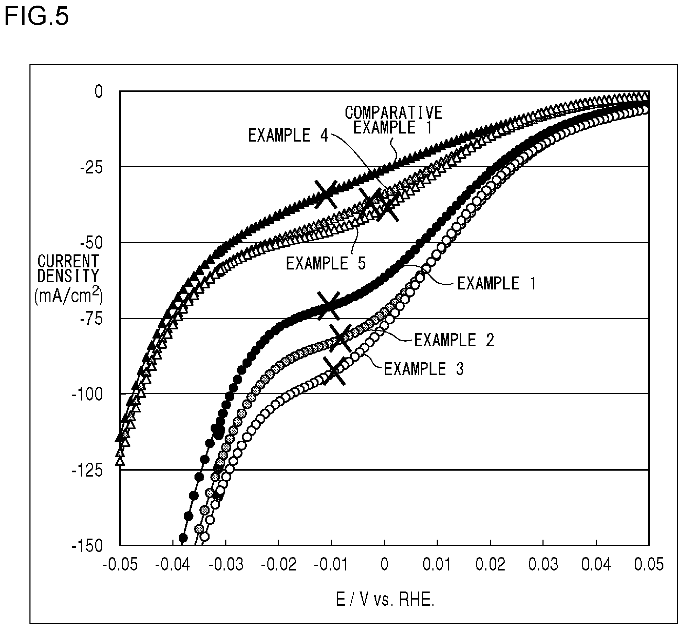

In each electrode unit, the density of a current flowing between a reduction electrode and an oxygen generating electrode, occurring when the potential difference between the two electrodes was changed, was measured. Fig. 5 is a graph showing I-V curves obtained by the respective electrode units of Examples from 1 to 5 and Comparative Example 1. As shown in Fig. 5, it has been confirmed that, when the potential differences between the reduction electrode and the reference electrode are made the same as each other, the absolute values of the current densities are further increased in Examples from 1 to 5, in comparison with that in Comparative Example 1. It has been confirmed that the absolute values of the current densities are remarkably increased particularly in Examples from 1 to 3. Additionally, the concentration of the toluene supplied to the reduction electrode was detected under a condition in which the absolute value of the current density was set to be 50 mA/cm². A converted substance amount was determined from a change in the toluene concentration by using gas chromatography. Additionally, an electricity amount was determined from the time integration of current time transition in each of the electrochemical measurement devices. Then, with the converted substance amount being divided by the electricity amount, Faraday efficiency was calculated. The obtained results with respect to the Faraday efficiencies are shown in Table 2. The absolute value of the current density at a boundary point (point indicated by mark "X" in Fig. 5) was measured, the boundary point being located between: a region where the hydrogenation of toluene is dominant, in other words, the Faraday efficiency is almost 100% and the hydrogenation of toluene selectively proceeds; and a region where the Faraday efficiency becomes less than 100% and the hydrogenation of toluene and hydrogen generation competitively proceed. The obtained results with respect to the boundary points are shown in Table 2.

**[Table 2]**

| | EXAMPLE 1 | EXAMPLE 2 | EXAMPLE 3 | COMPARATIVE EXAMPLE 1 | EXAMPLE 4 | EXAMPLE 5 |
|---|---|---|---|---|---|---|
| FARADAY EFFICIENCY (%) | 96 | 97 | 99 | 73 | 78 | 79 |
| BOUNDARY POINT: ABSOLUTE VALUE OF CURRENT DENSITY (mA/cm²) | 72 | 83 | 94 | 32 | 38 | 41 |

As shown in Table 2, it has been confirmed that, when the absolute value of the current density is set to be 50 mA/cm², the Faraday efficiencies in Examples from 1 to 5, in each of which the density layer is included, are further increased in comparison with that in Comparative Example 1.

It has been confirmed that the Faraday efficiencies in Examples from 1 to 3, in each of which the thickness of the density layer is 1 µm or more, are further increased in comparison with that in Example 4 in which the thickness thereof is less than 1 µm. Further, it has been confirmed that the Faraday efficiencies in Examples from 1 to 3, in each of which the mean flow pore diameter of the density layer is 20 µm or less, is still further increased in comparison with that in Example 5 in which the mean flow pore diameter is more than 20 µm. Particularly in Examples from 1 to 3, a larger current was able to be caused to flow in a state in which the Faraday efficiencies was almost 100%. That is, a larger amount of toluene was able to be hydrogenated per unit time. Among them, in Example 3 in which the ratio of the electron conductive powder to the water repellent was 4 or more, the Faraday efficiency was further improved in comparison with Examples 1 and 2 in each of which the ratio thereof was less than 4.

The present invention is not limited to the aforementioned embodiments, and various modifications, such as a design change, can be added thereto based on knowledge of those skilled in the art, and any embodiment to which such modifications are added can also be included in the scope of the present invention.

For example, a separator, including a diffusion layer for uniformly diffusing water to the oxygen generating electrode 130 and a flow channel for circulating water to be supplied to the oxygen generating electrode 130, may be installed on the side of the oxygen generating electrode 130 similarly to the side of the reduction electrode 120, instead of the current collector 160. Description of Reference Numerals

- 10: ELECTROCHEMICAL REDUCTION DEVICE

- 20: POWER CONTROLLER
- 30: ORGANIC SUBSTANCE STORAGE TANK
- 40: WATER STORAGE TANK
- 50: GAS-WATER SEPARATION UNIT
- 60: CONTROLLER
- 100: ELECTRODE UNIT
- 112: REFERENCE ELECTRODE
- 113: CURRENT DETECTION UNIT
- 114: VOLTAGE DETECTION UNIT
- 110: ELECTROLYTE MEMBRANE
- 120: REDUCTION ELECTRODE
- 122: REDUCTION ELECTRODE CATALYST LAYER
- 130: OXYGEN GENERATING ELECTRODE
- 140: DIFFUSION LAYER
- 142: DENSE LAYER
- 150: SEPARATOR
- 160: CURRENT COLLECTOR

### Industrial Applicability

The present invention can be used in an electrochemical reduction device.

## Claims

1. An electrochemical reduction device (10) comprising:
an electrolyte membrane (110) having a first major surface and a second major surface and exhibiting proton conductivity;
a reduction electrode (120) provided in a contacting relationship with the first major surface of the electrolyte membrane (110) and comprising:
- a reduction electrode catalyst layer (122) having a first layer surface and a second layer surface and provided with its first layer surface in a contacting relationship with the first major surface of the electrolyte membrane (110) and comprising of an electron conductive material and a metal containing one or both of Pt and Pd, said metal being supported by the electron conductive material,
- a diffusion layer (140) provided near the second layer surface of the reduction electrode catalyst layer (122), said the second layer surface being faced away from the first major surface of the electrolyte membrane (110) for allowing passage of a liquid aromatic compound selected from the group consisting of benzene, naphthalene, anthracene, diphenylethane, pyridine, pyrimidine, pyrazine, quinoline, isoquinoline, N-alkylpyrrole, N-alkylindole, N-alkyldibenzopyrrole, and compounds in which from one to four hydrogen atoms of an aromatic ring of the compounds are substituted by C1-6 alkyl groups and a hydride of the aromatic compound through the diffusion layer, and
- a dense layer (142) provided between the diffusion layer (140) and the reduction electrode catalyst layer (122), wherein the dense layer contains a mixture of an electron
conductive powder and a fluorine-based resin and wherein a mean flow pore diameter of the dense layer is from 100 nm to 23 µm and a thickness of the dense layer is from 0.76 µm to 50 µm; as well as
an oxygen generating electrode (130) provided in a contacting relationship with the second major surface of the electrolyte membrane (110);
a raw material supplier (32) for supplying the aromatic compound in a liquid state to the reduction electrode (120);
a moisture supplier (42) that supplies water or humidified gas to the oxygen generating electrode (130); and
a power controller (20) for externally applying an electric field between the reduction electrode (120) and the oxygen generating electrode (130) such that the reduction electrode (120) has an electronegative potential and the oxygen generating electrode (130) has an electropositive potential.

2. The electrochemical reduction device (10) according to claim 1, wherein
the dense layer (142) comprises multiple pores having a mean flow pore diameter 20 µm or less.

3. The electrochemical reduction device (10) according to claim 1 or claim 2, wherein
a thickness of the dense layer (142) (t) is 1 µm ≤ t ≤ 50 µm.

4. The electrochemical reduction device (10) according to any one of the claims 1 to 3, wherein
a mass ratio of the electron conductive powder to the fluorine-based resin in the mixture is 4:1 to 1:1.

5. The electrochemical reduction device (10) according to any one of claims 1 to 4, wherein
the diffusion layer (140) has a fiber-like shape.

6. The electrochemical reduction device (10) according to any one of claims 1 to 4, wherein
the diffusion layer (140) has a shape in which many particles of an alloy are solidified.

7. The electrochemical reduction device (10) according to any one of claims 1 to 5, wherein
the diffusion layer (140) contains a carbon fiber.

8. The electrochemical reduction device (10) according to any one of claims 1 to 7, wherein
the diffusion layer (140) contains a material having an electron conductivity of 1.0 × 10⁻² S/cm or more.

## Patentansprüche

1. Eine elektrochemische Reduktionsvorrichtung (10), die:
- eine Elektrolytmembran (110), die
Protonenleitfähigkeit und eine erste große Fläche und eine zweite große Fläche aufweist,
- eine Reduktionselektrode (120), die in einer in Kontakt stehenden Beziehung zu der ersten großen Fläche der Elektrolytmembran (110) bereitgestellt ist und:
- eine Reduktionselektrodenkatalysatorschicht (122), die eine erste Schichtfläche und eine zweite Schichtfläche aufweist und mit ihrer ersten Schichtfläche in einer in Kontakt stehenden Beziehung zu der ersten großen Fläche der Elektrolytmembran (110) bereitgestellt ist, und ein elektronenleitfähiges Material und ein eines oder beide von Pt und Pd enthaltendes Metall umfasst, wobei dieses Metall von dem elektronenleitfähigen Material getragen wird,
- eine Diffusionsschicht (140), die in der Nähe der zweiten Schichtfläche der
Reduktionselektrodenkatalysatorschicht (122) bereitgestellt ist, wobei diese zweite Schichtfläche von der ersten großen Fläche der Elektrolytmembran (110) abgewandt ist, um den Durchgang einer flüssigen aromatischen Verbindung, die aus der Gruppe ausgewählt ist, die aus Benzol, Naphthalin, Anthracen, Diphenylethan, Pyridin, Pyrimidin, Pyrazin, Chinolin, Isochinolin, N-Alkylpyrrol, N-Alkylindol, N-Alkyldibenzopyrrol und Verbindungen, bei welchen ein bis vier Wasserstoffatome eines aromatischen Rings der Verbindungen durch C₁- bis C₆-Alkylgruppen substituiert sind, besteht, und eines Hydrids der aromatischen Verbindung durch die Diffusionsschicht hindurch zu erlauben, und
- eine dichte Schicht (142), die zwischen der Diffusionsschicht (140) und der Reduktionselektrodenkatalysatorschicht (122) bereitgestellt ist, umfasst, wobei die dichte Schicht ein Gemisch aus einem elektronenleitfähigen Pulver und einem auf Fluor basierenden Harz enthält und wobei der mittlere Durchflussporendurchmesser der dichten Schicht von 100 nm bis 23 µm und die Dicke der dichten Schicht von 0,76 µm bis 50 µm beträgt, sowie
- eine Sauerstoff entwickelnde Elektrode (130), die in einer in Kontakt stehenden Beziehung zu der zweiten großen Fläche der Elektrolytmembran (110) angeordnet ist,
- eine Ausgangsstoffzufuhreinrichtung (32), für die Zufuhr der aromatischen Verbindung im flüssigen Zustand zu der Reduktionselektrode (120),
- eine Feuchtigkeitszufuhreinrichtung (42), die Wasser oder angefeuchtetes Gas zu der Sauerstoff entwickelnden Elektrode (130) zuführt, und
- einen Leistungsregler (20) für ein derartiges externes Anlegen eines elektrischen Feldes zwischen der Reduktionselektrode (120) und der Sauerstoff entwickelnden Elektrode (130), dass die Reduktionselektrode (120) ein elektronegatives Potential und die Sauerstoff entwickelnde Elektrode (130) ein elektropositives Potential besitzt, umfasst.

2. Die elektrochemische Reduktionsvorrichtung (10) nach Anspruch 1, wobei die dichte Schicht (142) viele Poren mit einem mittleren Durchflussporendurchmesser von 20 µm oder weniger enthält.

3. Die elektrochemische Reduktionsvorrichtung (10) nach Anspruch 1 oder 2, wobei die Dicke der dichten Schicht (142) (t) 1 µm ≤ t ≤ 50 µm beträgt.

4. Die elektrochemische Reduktionsvorrichtung (10) nach einem der Ansprüche 1 bis 3, wobei das Massenverhältnis von dem elektronenleitfähigen Pulver zu dem auf Fluor basierenden Harz in dem Gemisch 4:1 bis 1:1 beträgt.

5. Die elektrochemische Reduktionsvorrichtung (10) nach einem der Ansprüche 1 bis 4, wobei die Diffusionsschicht (140) eine faserartige Gestalt aufweist.

6. Die elektrochemische Reduktionsvorrichtung (10) nach einem der Ansprüche 1 bis 4, wobei die Diffusionsschicht (140) eine Gestalt aufweist, in der viele Teilchen einer Legierung verfestigt sind.

7. Die elektrochemische Reduktionsvorrichtung (10) nach einem der Ansprüche 1 bis 5, wobei die Diffusionsschicht (140) eine Kohlenstofffaser enthält.

8. Die elektrochemische Reduktionsvorrichtung (10) nach einem der Ansprüche 1 bis 7, wobei die Diffusionsschicht (140) ein Material mit einer Elektronenleitfähigkeit von 1,0·10⁻² S/cm oder mehr enthält.

## Revendications

1. Dispositif de réduction électrochimique (10) comprenant:
une membrane électrolytique (110) ayant une première surface principale et une deuxième surface principale et présentant une conductivité protonique;
une électrode réductrice (120) prévue en relation de contact avec la première surface principale de la membrane électrolytique (110) et comprenant:
- une couche de catalyseur d'électrode réductrice (122) ayant une première surface de couche et une deuxième surface de couche et prévue en ayant sa première surface de couche en relation de contact avec la première surface principale de la membrane électrolyte (110) et comprenant un matériau conducteur d'électrons et un métal contenant l'un ou les deux parmi Pt et Pd, ledit métal étant supporté par le matériau conducteur d'électrons,
- une couche de diffusion (140) prévue à proximité de la deuxième surface de couche de la couche de catalyseur d'électrode réductrice (122), ladite deuxième surface de couche étant opposée à la première surface principale de la membrane électrolytique (110) pour permettre le passage d'un composé aromatique liquide choisi dans le groupe constitué de benzène, de naphtalène, d'anthracène, de diphényléthane, de pyridine, de pyrimidine, de pyrazine, de quinoléine, d'isoquinoléine, de N-alkylpyrrole, de N-alkylindole, de N-alkyldibenzopyrrole et de composés dans lesquels un à quatre atome(s) d'hydrogène d'un noyau aromatique des composés est/sont substitué(s) par des groupes alkyle en C₁ à C₆ et un hydrure du composé aromatique à travers la couche de diffusion, et
- une couche dense (142) prévue entre la couche de diffusion (140) et la couche de catalyseur d'électrode réductrice (122), où la couche dense contient un mélange d'une poudre conductrice d'électrons et d'une résine à base de fluor et où un diamètre de pore à écoulement moyen de la couche dense est compris entre 100 nm et 23 µm et une épaisseur de la couche dense est comprise entre 0,76 µm et 50 µm; ainsi que une électrode de génération d'oxygène (130) prévue en relation de contact avec la deuxième surface principale de la membrane électrolytique (110);
un dispositif d'alimentation en matière première (32) pour fournir le composé aromatique à l'état liquide à l'électrode réductrice (120);
un dispositif d'alimentation en humidité (42) qui fournit de l'eau ou du gaz humidifié à l'électrode de génération d'oxygène (130); et
un régulateur de puissance (20) pour appliquer de l'extérieur un champ électrique entre l'électrode réductrice (120) et l'électrode de génération d'oxygène (130) de sorte que l'électrode réductrice (120) ait un potentiel électronégatif et l'électrode de génération d'oxygène (130) ait un potentiel électropositif.

2. Dispositif de réduction électrochimique (10) selon la revendication 1, dans lequel la couche dense (142) comprend de multiples pores ayant un diamètre de pore à écoulement moyen de 20 µm ou moins.

3. Dispositif de réduction électrochimique (10) selon la revendication 1 ou 2, dans lequel une épaisseur (t) de la couche dense (142) est telle que 1 µm ≤ t ≤ 50 µm.

4. Dispositif de réduction électrochimique (10) selon l'une quelconque des revendications 1 à 3, dans lequel un rapport massique de la poudre conductrice d'électrons sur la résine à base de fluor dans le mélange est compris entre 4:1 et 1:1.

5. Dispositif de réduction électrochimique (10) selon l'une quelconque des revendications 1 à 4, dans lequel la couche de diffusion (140) a une forme fibreuse.

6. Dispositif de réduction électrochimique (10) selon l'une quelconque des revendications 1 à 4, dans lequel la couche de diffusion (140) a une forme dans laquelle de nombreuses particules d'un alliage sont solidifiées.

7. Dispositif de réduction électrochimique (10) selon l'une quelconque des revendications 1 à 5, dans lequel la couche de diffusion (140) contient une fibre de carbone.

8. Dispositif de réduction électrochimique (10) selon l'une quelconque des revendications 1 à 7, dans lequel la couche de diffusion (140) contient un matériau ayant une conductivité électronique de 1,0 x 10⁻² S/cm ou plus.
